# EUROPEAN PATENT APPLICATION

(11) **EP 2 181 745 A1**
(43) Date of publication of application: **05.05.2010**
(21) Application number: 09174092.8
(22) Date of filing: 26.10.2009
(51) Int. Cl.: B01D 24/10, A01K 63/04, C02F 1/00

(54) **Vortex generator for a fluid filter**

(30) Priority: 28.10.2008 US 290185
(71) Applicant: Tetra Holding (US), Inc., Blacksburg Virginia 24060 (US)
(72) Inventor: Nuckols, Alvin E., jr, Floyd, VA 24091 (US)
(74) Representative: Zimmermann, Gerd Heinrich

(57) **Abstract**

A vortex generator (20) for use in a fluid filter (10) operable in both a normal filtering mode and a back flushing mode. The vortex generator including a flapper valve (28) that moves between an open position and a closed position in correspondence to the direction of fluid flow through the fluid filter. In the open position, fluid is permitted to flow through openings formed in a base of the vortex generator. In the closed position, fluid is prevented from flowing through the openings.

## Description

### Field of the Technology

The present disclosure relates generally to devices for use in the filtration industry, and various methods associated with such devices. More particularly, this disclosure relates to a water filter, and various methods associated with water filters and water filtration.

### Background

Filtration systems are often used to maintain the quality of water in pools, ponds, aquariums, and the like. Outdoor bodies of water, such as pools and ponds, are particularly susceptible to contaminants (e.g., clay, dirt, leaves, grass, pebbles, stones, and other materials) that affect water quality. Filtration systems typically include a filter that traps and contains such contaminants, and a pump that circulates water through the filter.

To maintain the operation of a filtration system, the user is often required to clean the filter by removing the trapped materials and contaminants filtered from the water. To aid in the cleaning of a filter, some conventional systems operate in a maintenance mode whereby water is back flushed through the filter to loosen and dislodge trapped contaminants and materials. In general, improvements to filtration systems having a back flushing mode of operation can be made.

### Summary

One aspect of the present invention relates to a filter operable in both a normal filtering mode and a back flushing mode as disclosed in claim 1. The filter includes a vortex generator that creates a fluid vortex within the filter when operated in the back flushing mode. Another aspect of the present invention relates to a vortex generator for use in a fluid filter as disclosed in claim 10. One aspect relates to a vortex generator for use in a fluid filter operable in both a normal filtering mode and a back flushing mode. In one aspect, the vortex generator includes a flapper valve that moves between an open position and a closed position in correspondence to the direction of fluid flow through the fluid filter. In the open position in one aspect, fluid is permitted to flow through openings formed in a base of the vortex generator. In the closed position in one aspect, fluid is prevented from flowing through the openings. In one aspect, the vortex generator includes a flapper valve that moves between an open position and a closed position in correspondence to filter's mode of operation. Another aspect of the present invention relates to a method of operating a fluid filter as disclosed in claim 14. Another aspect of the present invention relates to a fluid filter as disclosed in claim 15. Further embodiments are disclosed in the dependent claims. A variety of examples of desirable product features or methods are set forth in part in the description that follows, and in part will be apparent from the description, or may be learned by practicing various aspects of the disclosure. The aspects of the disclosure may relate to individual features as well as combinations of features. It is to be understood that both the foregoing general description and the following detailed description are explanatory only, and are not restrictive of the claimed invention.

### Brief Description of the Drawings

FIG. 1 is a sectional, front perspective view of one embodiment of fluid filter having a vortex generator (schematically represented) in accordance with the principles disclosed;
FIG. 2 is a top perspective view of the vortex generator schematically represented in FIG. 1, shown in isolation and illustrated with a flapper valve of the vortex generator in a closed position;
FIG. 3 is a top perspective view of the vortex generator of FIG. 2, illustrated without the flapper valve to show flow openings formed in a base of the vortex generator;
FIG. 4 is a bottom perspective view of the vortex generator of FIG. 2;
FIG. 5 is a schematic representation of the fluid filter of FIG. 1, illustrating fluid flow through the filter during normal filtering operations;
FIG. 6 is a schematic representation of the fluid filter of FIG. 1, illustrating fluid flow through the filter during back flushing operations; and
FIG. 7 is a top perspective view of the vortex generator of FIG. 2, illustrating the flap of the vortex generator in an open position during normal filtering operations.

### Detailed Description

Reference will now be made in detail to exemplary aspects of the present disclosure that are illustrated in the accompanying drawings. Wherever possible, the same reference numbers will be used throughout the drawings to refer to the same or like parts.

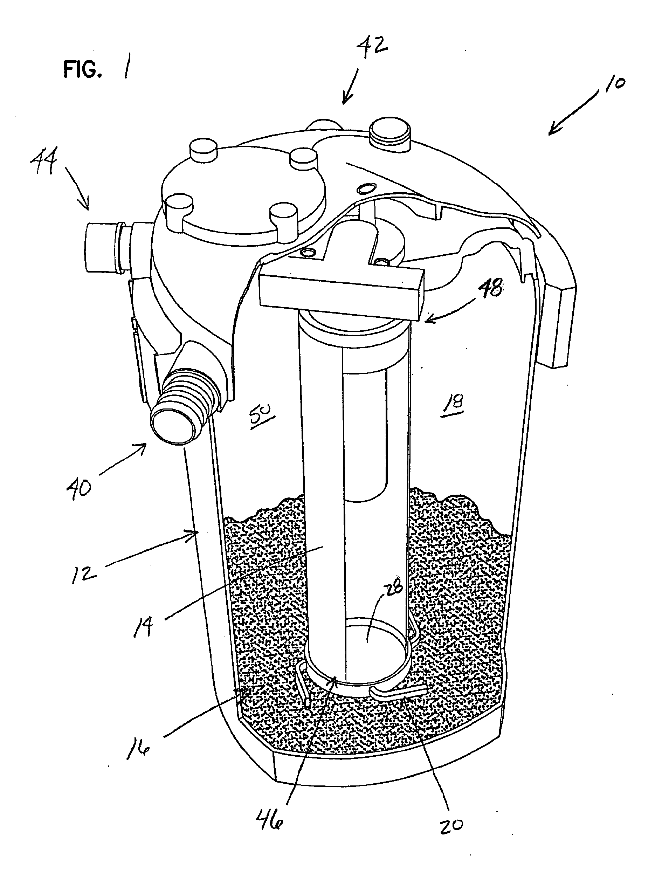

Referring to FIG. 1, the present disclosure generally relates to a vortex generator 20 for use in a fluid filter 10, such as a pond filter. The vortex generator 20 is used during back flushing operations to create a fluid vortex within the filter that dislodges particulates trapped by the filter during normal filtering operations. The present vortex generator 20 is designed to increase flow through the filter 10 during normal filtering operations to more efficiently filter water at a desired filtration rate, and maximize the effectiveness of back flushing operations. More specifically and as will be described in greater detail hereinafter, the present vortex generator 20 has openings that increase flow through the filter 10 during normal filtering operations, and a flapper valve that closes the openings to redirect water for the generation of a vortex during back flushing operations.

The filter 10 of FIG. 1 is typically used for the filtration of a fluid, such as pond water or aquarium water. While the remaining description refers to the filtration of water, it is to be understood that the present filter can be used in the filtration of other types of fluids.

In general, the filter 10 includes a filter housing 12 that defines an interior 50 and a plurality of ports 40, 42, 44. Each of the ports 40, 42, 44 is in fluid communication with the interior 50. The plurality of ports includes a first fluid port 40 that is an input port during normal filtering operations and a second fluid port 42 that is an output port during normal filtering operations. During back flushing operations, the second fluid port 42 functions as an input port to the reverse backflushing waterflow, and a third fluid port 44 of the plurality of ports functions as the discharge or output port.

The filter 10 further includes a central flow tube 14 located within the interior 50 of the filter housing 12. The central flow tube 14 has a first end 46 located adjacent to the bottom of the housing 12, and a second opposite end 48 that connects to the second fluid port 42 of the housing. In general, the central flow tube 14 provides fluid communication between the second fluid port 42 and the interior 50 of the housing 12.

The central flow tube 14 and the housing 12 define an annular filtering chamber 18. Filter media 16 (schematically represented) is located and/or deposited within the annular filtering chamber 18. Water circulating through the filter 10 during normal filtering operations must pass through the filter media 16 before exiting the housing 12 through the second fluid port 42. The filter media 16 traps and contains contaminants as the water passes through the media.

The vortex generator 20 is located adjacent to the bottom or first end 46 of the central flow tube 14 and provides all fluid communication between the central flow tube 14 and the annular filtering chamber 18. The vortex generator 20 further defines the only flow passageway between the fluid ports 40, 42, 44 during both normal filtering operations and back flushing operations. As will be described in greater detail hereinafter, during back flushing operations, the vortex generator 20 creates a water vortex within the filter housing 12 that directs the flow of water in a circular direction within the annular filtering chamber 18. The creation of the water vortex aids in removing particulates trapped by the filter media 16.

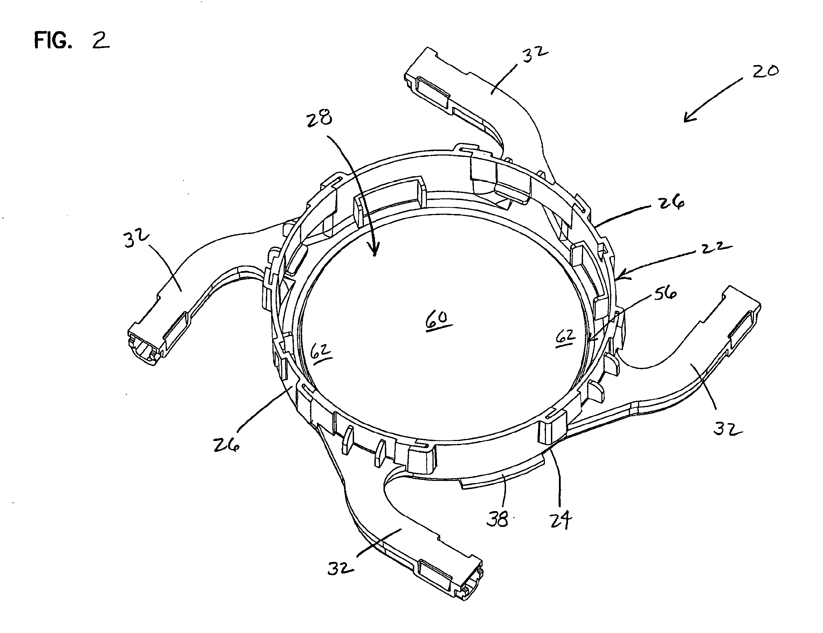

Referring now to FIG. 2, the vortex generator 20 is illustrated in isolation. The vortex generator 20 generally includes a base 22, a plurality of directional flow elements or arms 32, and a movable flapper valve 28 (e.g., flap, control device, or cover).

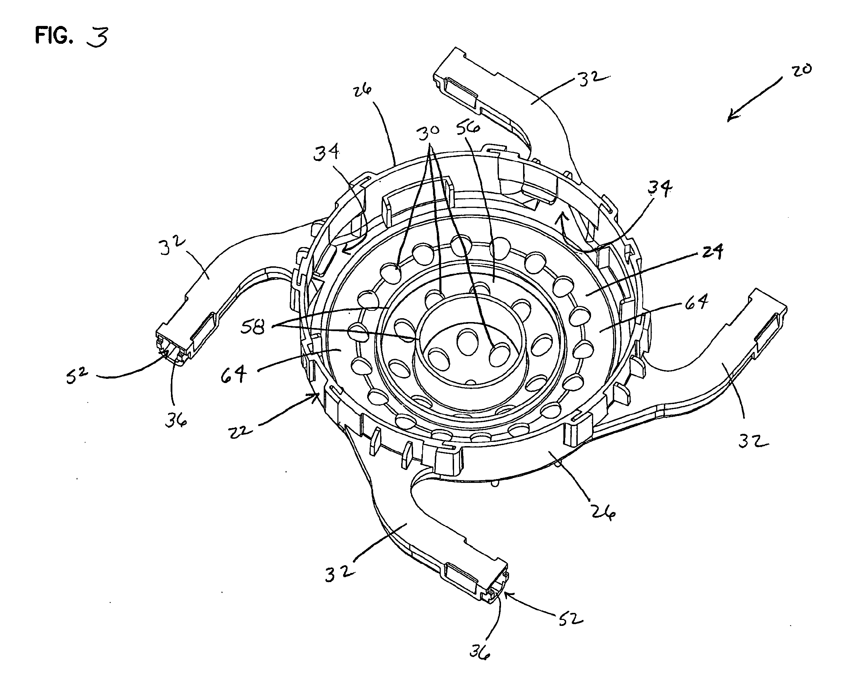

When positioned within the filter housing 12, the base 22 of the vortex generator 20 defines a bottom wall 24 and upwardly depending side walls 26. (See also FIG. 3 illustrating the vortex generator without the flapper valve 28 for purposes of explanation.) Referring to FIG. 3, the vortex generator 20 defines openings 30 that are formed in the bottom wall 24 of the base 22.

The arms 32 of the vortex generator 20 extend outward from the side walls 26 of the base 22 in a spiral-like manner. Each arm 32 defines an internal water channel 52. The internal water channels 52 are in fluid communication with apertures 34 formed in the side walls 26 of the base 22. The spiraling arms 32 curve in one direction to create the fluid vortex during back flushing operations. In particular and as will be discussed in greater detail hereinafter, during back flushing operations, water is directed through the apertures 34 in the base 22, through the water channels 52, and out an aperture 36 located at an end of each spiraling arm 32 to generate the vortex.

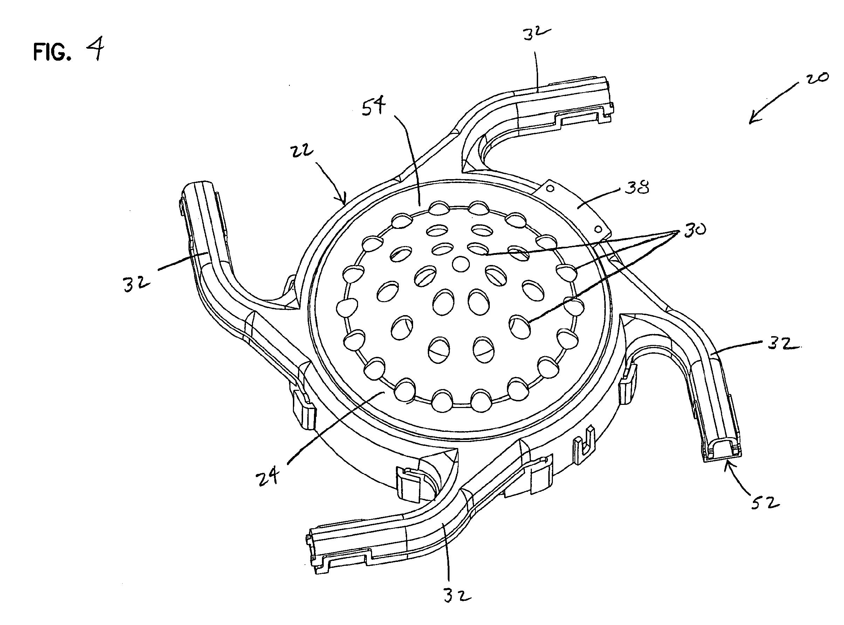

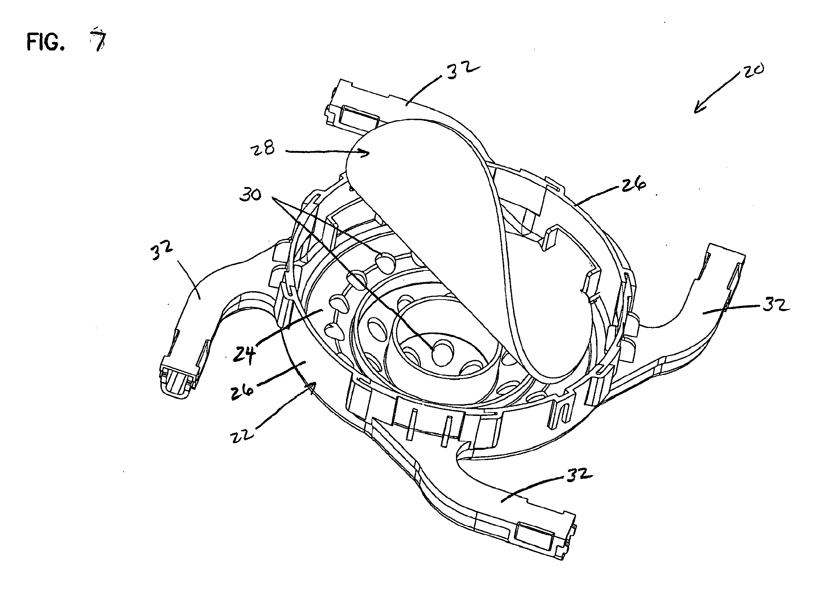

Referring again to FIGS. 1 and 2, when positioned within the filter housing 12, the flapper valve 28 of the vortex generator 20 is positioned at a downstream side (e.g., 56) of the bottom wall 24 of the vortex generator 20 (i.e., downstream in relation to the flow of water during normal filtering operation). The flapper valve 28 includes a tab 38 (FIG. 4) that attaches the flapper valve 28 to the base 22. The flapper valve 28 is constructed to pivot or move between a closed position in which the openings 30 of the bottom wall 24 are covered (FIG. 2), and an open position in which the openings 30 are uncovered (FIG. 7).

In the illustrated embodiment, the moveable flapper valve 28 is arranged and constructed to automatically move to the open position during normal filtering operations, and automatically move to the closed position during back flushing operations. What is meant by "automatically" is that the flapper valve moves due to only the direction of fluid flow through the filter housing, as opposed to being mechanically or electrically moved. In particular, during normal filtering operations, the flow of the water through the filter housing 12 in a direction from a first flow side 54 of the base 22 to a second flow side 56 causes the flapper valve 28 to lift and open to permit flow through the openings 30 (see e.g., FIG. 7). During back flushing operations, the flow of water through the filter housing in an opposite direction causes the flapper valve 28 to close and cover the openings 30 to prevent flow through the openings. In one embodiment, the moveable flapper valve is made of a flexible rubber construction that responds to the direction of fluid flow and permits the valve to move automatically between the open and closed positions. In an alternative embodiment, the flapper valve may have a hinged connection that permits the valve to accordingly respond to the direction of fluid flow through the filter 10.

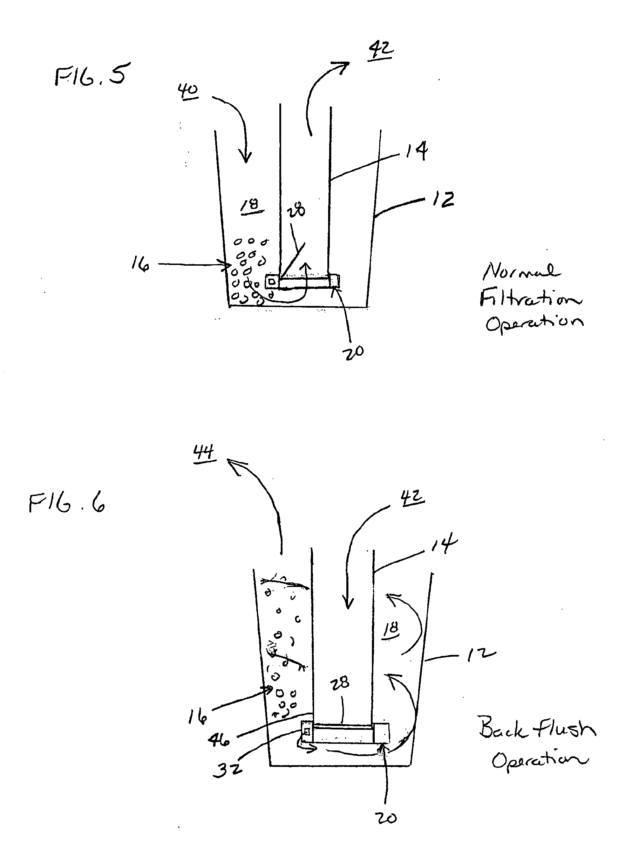

Referring now to FIG. 5, during normal filtering operation, water enters the annular filtering chamber 18 through the first fluid port 40. The water then flows through the filter media 16, and is returned to the body of water through the central flow tube 14 and second fluid port 42. To enter the central flow tube 14, the flow of water passes through the openings 30 (FIG. 7) of the vortex generator 20 by moving (e.g., pushing or lifting) the flapper valve 28 from the closed position to the open position (as shown in FIGS. 5 and 7). The openings 30 of the vortex generator 20 define the primary flow passageway for water flowing through the filter housing 12 during normal filtering operations (i.e., for water flowing from the first fluid port 40 to the second fluid port 42).

Referring now to FIG. 6, during back flushing operations, water is pumped through the filter 10 in an opposite direction. In particular, water is pumped from the second fluid port 42, through the central flow tube 14 towards the annular filtering chamber 18. As the water flows toward the bottom end 46 of the central flow tube 14, the water flow encounters the vortex generator 20. The backward water flow causes the flapper valve 28 of the vortex generator 20 to close so that water cannot flow through the openings 30. The water is instead directed through the curved water channels 52 of the spiraling arms 32.

Referring back to FIGS. 2 and 3, the base 22 of the vortex generator 20 includes support structures 58 (FIG. 3) that support the flapper valve 28 when water is flowing through the filter 10 in the reversed back flushing direction. In the illustrated embodiment, the support structures 58 include annual walls or rings concentrically located in relation to one another. The support structures 58 support a central region 60 (FIG. 2) of the flapper valve 28 whereby an outer region 62 of the flapper valve 28 seats and seals against an annular portion 64 (FIG. 3) of the base 22. Accordingly, during back flushing operations, the water channels 52 of the arms 32 define the only flow passageway for water flowing through the filter housing 12 (i.e., from the second fluid port 42 to the third fluid port 44), as the flapper valve 28 completely closes the openings 30.

The flow of water through the spiraling arms 32 creates a circular movement of water within the annular chamber 18 to generate a vortex. In addition, the water channels of the arms 32 generally define smaller orifices such that water flowing through the spiraling arms 32 is at a higher pressure than the water flow during normal filtering operations. The higher pressure vortex of water created by the arms 32 of the vortex generator 20 functions to dislodge particulates collected by the filter media 16 of the filter 10.

The dislodged particulates are carried with the reversed water flow and flushed out or discharged through the third discharge port 44 of the filter housing 12. In one example, the filter media 16 includes beads that settle at the bottom of the filter housing 12 during normal filtering operation. During back flushing operation, the high pressure stream of water from the vortex generator 20 acts to disrupt the beads, as shown in FIG. 6, and loosen and dislodge particulates from the beads.

In general, the present vortex generator 20 having the openings 30 and the flapper valve 28 maximizes filtration efficiencies by increasing water flow through the filter 10 during normal filtering operations, and provides a spiraling high pressure vortex that maximizes the effectiveness of back flushing operations. The above specification provides a complete description of the present invention. Since many embodiments of the invention can be made without departing from the spirit and scope of the invention, certain aspects of the invention reside in the claims hereinafter appended.

## Claims

1. A fluid filter operable in both a normal filtering mode and a back flushing mode, the fluid filter comprising:
a) a filter housing defining an interior; and
b) a vortex generator positioned within the interior of the filter housing, the vortex generator creating a fluid vortex within the interior of the filter housing during back flushing operations, the vortex generator including a base that defines openings and a moveable flapper valve attached to the base;
c) wherein during back flushing operations, the flapper valve of the vortex generator is in a closed position that prevents fluid flow through the openings of the base, and wherein during normal filtering operations, the flapper valve is in an open position that permits fluid flow through the openings of the base, the positioning of the moveable flapper valve between the closed and open positions occurring due to the direction of fluid flow through the filter housing.

2. The filter of claim 1, wherein the filter housing defines a plurality of fluid ports in communication with the interior, the vortex generator defining the only flow passageway between the fluid ports during both normal filtering operations and back flushing operations.

3. The filter of claim 2, wherein the plurality of fluid ports includes:
a) a first fluid port that is an input port during normal filtering operations;
b) a second fluid port that is an output port during normal filtering operations, and is further an input port during back flushing operations; and
c) a third fluid port that is an output port during back flushing operations.

4. The filter of any of the preceding claims, wherein during normal filtering operations, the openings in the base define the primary flow passageway for water flowing through the filter housing , and/or define the primary flow passageway between the first fluid port and the second fluid port.

5. The filter of any of the preceding claims, wherein the vortex generator further includes a plurality of arms extending from the base, each arm defining a water channel, wherein during back flushing operations, the water channels define the only flow passageway for water flowing through the filter housing and/or define the only flow passageway between the second fluid port and the third fluid port.

6. The filter of any of the preceding claims, further including a central flow tube located within the interior of the filter housing, the central flow tube and the housing defining an annular filtering chamber, wherein the vortex generator provides all fluid communication between the central flow tube and the annular filter chamber.

7. The filter of any of the preceding claims, wherein the base includes a bottom wall and a side wall, the bottom wall defining the openings, the side wall defining apertures.

8. The filter of any of the preceding claims, wherein the vortex generator includes a plurality of arms, each arm defining an internal fluid channel that is in fluid communication with one of the apertures defined by the side wall of the base, wherein the plurality of arms preferably includes a plurality of spiraling arms that curve in one direction to create the fluid vortex during back flushing operations.

9. The filter of any of the preceding claims, wherein the moveable flapper valve is made of a flexible rubber construction.

10. A vortex generator for use in a fluid filter, the vortex generator comprising:
a) a base defining a plurality of apertures and a plurality of openings;
b) arms extending from the base, the arms defining fluid channels, the fluid channels being in fluid communication with the apertures of the base; and
c) a moveable flapper valve attached to the base, the moveable flapper valve being positionable in an open position that permits fluid flow through the openings of the base, and a second position that prevents fluid flow through the openings of the base;
d) wherein during use, the flapper valve automatically moves between the open position and the closed position in response to the direction of fluid flow through the fluid filter.

11. The vortex generator of claim 10, wherein the base includes a bottom wall and a side wall, the bottom wall defining the plurality of openings, the side wall defining the plurality of apertures.

12. The vortex generator of claim 10 or 11, wherein the fluid channels of the arms are internal fluid channels, each internal fluid channel being in fluid communication with one of the apertures defined by the side wall of the base.

13. The vortex generator of any of claims 10 to 12, wherein the moveable flapper valve is made of a flexible rubber construction that responds to the direction of fluid flow during use and/or wherein the arms are spiraling arms that curve in one direction to create a fluid vortex during use.

14. A method of operating a fluid filter, the method comprising the steps of:
a) filtering water in a first flow direction through a filter housing;
b) back flushing water in a second, reversed flow direction through the filter housing, the step of back flushing including:
i) automatically moving a flapper valve within the filter housing from an open position to a closed position such that water flowing in the second, reversed flow direction is directed through curved water channels that create a vortex within the filter housing.

15. A fluid filter operable in both a normal filtering mode and a back flushing mode, the fluid filter comprising:
a) a filter housing defining an interior and a plurality of fluid ports in fluid communication with the interior; and
b) a vortex generator positioned within the interior of the filter housing, the vortex generator defining the only flow passageway between the fluid ports of the filter housing during both normal filtering operations and back flushing operations, the vortex generator including:
i) a base having a bottom wall and a side wall, the bottom wall defining openings, the side wall defining apertures;
ii) a plurality of spiraling arms extending from the base, each arm defining an internal fluid channel that is in fluid communication with one of the apertures defined by the side wall, the vortex generator creating a fluid vortex within the interior of the filter housing during back flushing operations; and
iii) a moveable flapper valve attached to the base;
c) wherein during back flushing operations, the flapper valve of the vortex generator is in a closed position that prevents fluid flow through the openings of the base, and wherein during normal filtering operations, the flapper valve is in an open position that permits fluid flow through the openings of the base, the positioning of the moveable flapper valve between the closed and open positions occurring due to the direction of fluid flow through the filter housing.

## Amended claims

### Amended claims in accordance with Rule 137(2) EPC.

**1.** A vortex generator (20) for use in a fluid filter (10), the vortex generator (20) comprising:
a) a base (22) defining a plurality of apertures (34) and a plurality of openings (30);
b) arms (32) extending from the base (22), the arms (32) defining fluid channels, the fluid channels being in fluid communication with the apertures (34) of the base (22); and **characterized in that** in further comprises
c) a moveable flapper valve (28) attached to the base (22), the moveable flapper valve (28) being positionable in an open position that permits fluid flow through the openings (30) of the base (22), and a second position that prevents fluid flow through the openings (30) of the base (22);
d) wherein during use, the flapper valve (28) automatically moves between the open position and the closed position in response to the direction of fluid flow through the fluid filter (10)
, wherein the base (22) includes a bottom wall (24) and a side wall (26), the bottom wall (24) defining the plurality of openings (30), the side wall (26) defining the plurality of apertures (34).

**2.** The vortex generator (20) of claim 1, wherein the fluid channels of the arms (32) are internal fluid channels, each internal fluid channel being in fluid communication with one of the apertures (34) defined by the side wall (26) of the base (22).

**3.** The vortex generator (20) of any of claims 1 or 2, wherein the moveable flapper valve (28) is made of a flexible rubber construction that responds to the direction of fluid flow during use and/or wherein the arms (32) are spiraling arms (32) that curve in one direction to create a fluid vortex during use.

**4.** A method of operating a fluid filter (10), the method comprising the steps of:
a) filtering water in a first flow direction through a filter housing (12);
b) back flushing water in a second, reversed flow direction through the filter housing (12), **characterized in that** the step of back flushing includes:
i) automatically moving a flapper valve (28) within the filter housing (12) from an open position to a closed position such that water flowing in the second, reversed flow direction is directed through curved water channels (52) that create a vortex within the filter housing (12) wherein the vortex is created by a vortex generator (20) as claimed in any of claims 1 to 3.

**5.** A fluid filter (10) operable in both a normal filtering mode and a back flushing mode, the fluid filter (10) comprising:
a) a filter housing (12) defining an interior (50); and
**characterized in that** it further comprises:
b) a vortex generator (20) as claimed in claim 1 positioned within the interior (50) of the filter housing (12), the vortex generator (20) creating a fluid vortex within the interior (50) of the filter housing (12) during back flushing operations;
c) wherein during back flushing operations, the flapper valve (28) of the vortex generator (20) is in a closed position that prevents fluid flow through the openings (30) of the base (22), and wherein during normal filtering operations, the flapper valve (28) is in an open position that permits fluid flow through the openings (30) of the base (22), the positioning of the moveable flapper valve (28) between the closed and open positions occurring due to the direction of fluid flow through the filter housing (12).

**6.** The filter (10) of claim 5, wherein the filter housing (12) defines a plurality of fluid ports (40, 42, 44) in communication with the interior (50), the vortex generator (20) defining the only flow passageway between the fluid ports (40, 42, 44) during both normal filtering operations and back flushing operations.

**7.** The filter (10) of claim 6, wherein the plurality of fluid ports (40, 42, 44) includes:
a) a first fluid port (40) that is an input port during normal filtering operations;
b) a second fluid port (42) that is an output port during normal filtering operations, and is further an input port during back flushing operations; and
c) a third fluid port (44) that is an output port during back flushing operations.

**8.** The filter (10) of any of claims 5 to 7, wherein during normal filtering operations, the openings (30) in the base (22) define the primary flow passageway for water flowing through the filter housing (12), and/or define the primary flow passageway between the first fluid port (40) and the second fluid port (42).

**9.** The filter (10) of any of claims 5 to 8, wherein the vortex generator (20) further includes a plurality of arms (32) extending from the base (22), each arm defining a water channel (52), wherein during back flushing operations, the water channels (52) define the only flow passageway for water flowing through the filter housing (12) and/or define the only flow passageway between the second fluid port (42) and the third fluid port (44).

**10.** The filter (10) of any of claims 5 to 9, further including a central flow tube (14) located within the interior (50) of the filter housing (12), the central flow tube (14) and the housing (12) defining an annular filtering chamber (18), wherein the vortex generator (20) provides all fluid communication between the central flow tube (14) and the annular filter chamber (18).

**11.** The filter (10) of any of claims 5 to 10, wherein the vortex generator (20) includes a plurality of arms (32), each arm defining an internal fluid channel that is in fluid communication with one of the apertures (34) defined by the side wall (26) of the base (22), wherein the plurality of arms (32) preferably includes a plurality of spiraling arms (32) that curve in one direction to create the fluid vortex during back flushing operations.

**12.** The filter (10) of any of claims 5 to 11, wherein the moveable flapper valve (28) is made of a flexible rubber construction.

**13.** A fluid filter (10) according to any of claims 5 to 12 operable in both a normal filtering mode and a back flushing mode, the fluid filter comprising:
a) a filter housing (12) defining an interior (50) and a plurality of fluid ports (40, 42, 44) in fluid communication with the interior (50); and
b) a vortex generator (20) positioned within the interior (50) of the filter housing (12), the vortex generator (20) defining the only flow passageway between the fluid ports (40, 42, 44) of the filter housing (12) during both normal filtering operations and back flushing operations, the vortex generator (20) including:
i) a base (22) having a bottom wall (24) and a side wall (26), the bottom wall (24) defining openings (30), the side wall (26) defining apertures (34);
ii) a plurality of spiraling arms (32) extending from the base (22), each arm defining an internal fluid channel that is in fluid communication with one of the apertures (34) defined by the side wall (26), the vortex generator (20) creating a fluid vortex within the interior (50) of the filter housing (12) during back flushing operations; and
iii) a moveable flapper valve (28) attached to the base (22);
c) wherein during back flushing operations, the flapper valve (28) of the vortex generator (20) is in a closed position that prevents fluid flow through the openings (30) of the base (22), and wherein during normal filtering operations, the flapper valve (28) is in an open position that permits fluid flow through the openings (30) of the base (22), the positioning of the moveable flapper valve (28) between the closed and open positions occurring due to the direction of fluid flow through the filter housing (12).
